# EUROPÄISCHE PATENTANMELDUNG

(11) **EP 1 494 016 A2**
(43) Veröffentlichungstag der Anmeldung: **05.01.2005**
(21) Anmeldenummer: 04102425.8
(22) Anmeldetag: 01.06.2004
(51) Int. Cl.: G01N 21/95, G01N 21/88, G02B 27/00, H01L 21/66

(54) **Vorrichtung zur Inspektion eines Wafers**

(30) Priorität: 03.07.2003 DE 10330006
(71) Anmelder: Leica Microsystems Semiconductor GmbH, 35578 Wetzlar (DE)
(72) Erfinder: Kreh, Albert, 35606, Solms (DE); Backhauss, Henning, 35578, Wetzlar (DE)
(74) Vertreter: Reichert, Werner F., Dr.

(57) **Zusammenfassung**

Die Erfindung betrifft eine Vorrichtung zur Inspektion eines Wafers (6), umfassend zumindest zwei Auflicht-Beleuchtungseinrichtungen (2,2´), die einen jeweiligen Beleuchtungs-Lichtstrahl abstrahlen, der schräg auf die Oberfläche eines zu inspizierenden Wafers einfällt und jeweils eine Beleuchtungsachse (9,9´) festlegt, eine Bilderfassungseinrichtung (4) zum Erfassen eines Bildes der Oberfläche in einer Dunkelfeld-Anordnung sowie eine Wafer-Aufnahmeeinrichtung (7) zum Aufnehmen des Wafers unter einer vorgebbaren Orientierung, auf dessen Oberfläche linienförmig verlaufende Strukturen ausgebildet sind. Die Vorrichtung zeichnet sich dadurch aus, dass die Beleuchtungsachsen (9,9´) senkrecht zueinander ausgerichtet sind und die Vorrichtung so ausgelegt ist, dass eine Projektion der jeweiligen Beleuchtungsachse auf die Oberfläche des Wafers im Wesentlichen senkrecht zu jeweiligen linienförmigen Strukturen auf der Oberfläche des Wafers ausgerichtet ist.

Mit der Vorrichtung lassen sich Makrodefekte detektieren und die Qualität des Kantenprofils von auf der Oberfläche des Wafers ausgebildeten Strukturen beurteilen.

## Beschreibung

Die vorliegende Erfindung betrifft eine Vorrichtung zur Inspektion eines Wafers und betrifft insbesondere eine Vorrichtung zur Detektion von Makro-Defekten sowie zur Beurteilung des Kantenprofils von Strukturen, die auf dem Wafer ausgebildet sind, beispielsweise von integrierten Schaltkreisen (ICs).

In der Halbleiterfertigung werden Wafer während des Fertigungsprozesses in einer Vielzahl von Prozessschritten sequenziell bearbeitet. Mit zunehmender Integrationsdichte steigen die Anforderungen an die Qualität von auf dem Wafer auszubildenden Strukturen. Zu diesem Zweck ist es von Vorteil, wenn man die Qualität auch einzelner Prozessschritte, beispielsweise von Lithographieschritten, während des Herstellungsprozesses und noch vor einem nachgeordneten Prozessschritt zuverlässig beurteilen kann. Denn wird bereits nach Ausführung eines Prozessschrittes und noch vor der Beendigung eines Fertigungsprozesses bestimmt, dass ein Wafer oder auf dem Wafer ausgebildete Strukturen fehlerhaft sind, so kann der Wafer unmittelbar ausgesondert werden, ohne dass noch nachgeordnete Prozessschritte ausgeführt werden müssen. Oder der für fehlerhaft befundene Wafer kann gesondert nachbehandelt werden, bis eine zufrieden stellende Qualität erzielt ist. In dieser Weise kann die Effizienz und Ausbeute in der Halbleiterfertigung erhöht werden.

Zur Inspektion der Oberfläche von Wafern eignen sich insbesondere optische Vorrichtungen. Es sind optische Vorrichtungen bekannt, die durch Bilderkennung verschiedenste Strukturen auf der Oberfläche eines Wafers erkennen können. Hierbei wird der Wafer üblicherweise im Hellfeld beleuchtet und mit einer Kamera (Matrix- oder Zeilenkamera) abgetastet.

Eine solche Inspektionsvorrichtung der KLA-Tencor Corporation wird in dem Artikel "Lithography Defects: Reducing and Managing Yield Killers through Photo Cell Monitoring" von Ingrid Peterson, Gay Thompson, Tony DiBiase und Scott Ashkenaz, Spring 2000, Yield Management Solutions, beschrieben. Die dort beschriebene Wafer-Inspektionsvorrichtung arbeitet mit einer Auflicht-Beleuchtungseinrichtung, welche mit einer Hellfeld-/ Dunkelfeldbeleuchtung Mikrodefekte mit geringem Kontrast untersucht.

Bei gewissen Makro-Defekten erzeugen die vorgenannten Beleuchtungsarten nicht genügend Kontrast. Außerdem kann die Qualität des Kantenprofils von Strukturen, die auf dem Wafer ausgebildet werden, beispielsweise von geätzten Vertiefungen, von Vorsprüngen, Leiterbahnen oder dergleichen, nicht ausreichend beurteilt werden.

Aufgabe der vorliegenden Erfindung ist es, eine Vorrichtung zur Inspektion eines Wafers zu schaffen, mit der Makro-Defekte mit großem Kontrast bestimmt werden können. Ferner soll eine Vorrichtung zur Inspektion eines Wafers geschaffen werden, mit der die Qualität des Kantenprofils von auf dem Wafer ausgebildeten Strukturen zuverlässig und in einfacher Weise beurteilt werden kann.

Diese Aufgabe wird gelöst durch eine Vorrichtung zur Inspektion eines Wafers mit den Merkmalen nach Anspruch 1. Vorteilhafte weitere Ausführungsformen sind Gegenstand der rückbezogenen Unteransprüche.

Gemäß der vorliegenden Erfindung umfasst eine Vorrichtung zur Inspektion eines Wafers zumindest zwei Auflicht-Beleuchtungseinrichtung, die jeweils einen Beleuchtungs-Lichtstrahl abstrahlen, der schräg auf eine Oberfläche eines zu inspizierenden Wafers einfällt und eine jeweilige Beleuchtungsachse festlegt, eine Bilderfassungseinrichtung zum Erfassen eines Bildes der Oberfläche des Wafers in einer Dunkelfeld-Anordnung sowie eine Wafer-Aufnahmeeinrichtung zum Aufnehmen des Wafers unter einer vorgebbaren Orientierung. Erfindungsgemäß zeichnet sich die Vorrichtung dadurch aus, dass die Beleuchtungsachsen senkrecht zueinander ausgerichtet sind und die Vorrichtung so ausgelegt ist, dass eine Projektion der jeweiligen Beleuchtungsachse auf die Oberfläche des Wafers im Wesentlichen senkrecht zu jeweiligen linienförmigen Strukturen auf der Oberfläche des Wafers ausgerichtet ist.

Bekanntermaßen verlaufen viele Strukturen auf der Oberfläche von Wafern, beispielsweise Leiterbahnen, geätzte Vertiefungen oder Vorsprünge, im Wesentlichen linienförmig. Weil gemäß der vorliegenden Erfindung das zur Beleuchtung der Oberfläche des Wafers verwendete Licht senkrecht zu den Strukturen verlaufend auf die Oberfläche des Wafers einfällt, können Fehler, die sich entlang den linienförmigen Strukturen aufgrund von Prozessschrittfehlern anhäufen oder sich entlang den Strukturen oder senkrecht zu diesen erstrecken, mit besonders großem Kontrast detektiert werden. Mit der erfindungsgemäßen Vorrichtung lassen sich Makro-Defekte verschiedenster Art feststellen, insbesondere Makro-Defekte an Vorsprüngen oder Vertiefungen oder Verzerrungen auf der Oberfläche des Wafers. Die Erfinder haben herausgefunden, dass unstrukturierte oder nur wenig strukturierte Oberflächenbereiche vergleichsweise wenige Defekte aufweisen, während sich Defekte häufig in der Nähe von Bereichen anhäufen, wo sich das Profil der Oberfläche des Wafers abrupt oder diskontinuierlich ändert.

Die von den mindestens zwei Auflicht-Beleuchtungseinrichtungen abgestrahlten Beleuchtungs-Lichtstrahlen fallen schräg auf die Oberfläche des Wafers ein und werden somit unter einem nicht verschwindenden Ausfallswinkel relativ zu einer Normalen auf die Oberfläche des Wafers reflektiert. Die Bilderfassungseinrichtung ist in einer Dunkelfeld-Anordnung angeordnet, so dass das von der Oberfläche des Wafers reflektierte Beleuchtungslicht vorzugsweise vollständig aus der Bilderfassungseinrichtung ausgeblendet ist und diese nur Streulicht, das von einem beleuchteten Oberflächenbereich herrührt, erfasst. Das erfasste Bild wird vorzugsweise digital ausgelesen und weiterverarbeitet. Die Auflicht-Beleuchtungseinrichtung kann die gesamte Oberfläche des Wafers oder vorgebbare Unterabschnitte auf der Oberfläche des Wafers, beispielsweise Dies oder mehrere Dies umfassende Unterabschnitte, beleuchten. Vorzugsweise entspricht das Bildfeld der Bilderfassungseinrichtung dem beleuchteten Oberflächenbereich.

Bevorzugt kann die Orientierung, unter der der zu inspizierende Wafer auf der Wafer-Aufnahmeeinrichtung aufgenommen ist, reproduzierbar vorgegeben werden. Zu diesem Zweck kann der erfindungsgemäßen Vorrichtung ein Prealigner zugeordnet sein, welcher die Lage eines Notches oder Flats auf dem Außenumfang des Wafers bestimmt, den Wafer anhand des Notches oder Flats ausrichtet und dann unter Beibehaltung der vorgegebenen Orientierung an die Wafer-Aufnahmeeinrichtung übergibt. In Kenntnis des Layouts der auf dem Wafer auszubildenden Strukturen kann dann die Orientierung der von dem jeweiligen Beleuchtungs-Lichtstrahl festgelegten Beleuchtungsachse so abgestimmt werden, dass deren Projektion auf die Oberfläche des Wafers im Wesentlichen senkrecht zu den linienförmig verlaufenden Strukturen auf der Oberfläche des Wafers ausgerichtet ist.

Während es bevorzugt wird, dass die vorgenannte Ausrichtung der jeweiligen Beleuchtungsachse unter Einhaltung von minimalen Toleranzen erfolgt, wurde festgestellt, dass mit der erfindungsgemäßen Vorrichtung Defekte auf der Oberfläche des Wafers auch dann noch zuverlässig und mit hohem Kontrast festgestellt und beurteilt werden können, wenn die Abweichung von dem Idealfall einer parallelen oder senkrechten Ausrichtung bis zu einige wenige Grad beträgt, etwa bis etwa 5°, bevorzugter nur bis etwa 3° und noch bevorzugter nur bis etwa 1° oder sehr viel weniger beträgt.

Mit Hilfe der erfindungsgemäßen Vorrichtung lässt sich besonders bevorzugt auch die Qualität des Kantenprofils von auf dem Wafer ausgebildeten Strukturen beurteilen. Weil gerundete Kanten von linienförmigen Strukturen auf der Oberfläche des Wafers für das schräg oder streifend einfallende Beleuchtungslicht wie ein Spiegel wirken, besitzt jedes Layout ein charakteristisches Reflexions- und Streulichtmuster. Ändert sich dieses Muster in einer Charge von Wafern, so kann mit Hilfe der erfindungsgemäßen Vorrichtung in einfacher Weise auf Abweichungen von dem durch das Layout vorgegebenen Soll-Kantenprofil geschlossen werden.

Bevorzugt ist die von der Bilderfassungseinrichtung festgelegte Abbildungsachse senkrecht zur Oberfläche des zu inspizierenden Wafers orientiert, so dass die Dunkelfeld-Anordnung durch einen schrägen Einfall des Beleuchtungs-Lichtstrahls auf die Oberfläche realisiert wird. Grundsätzlich kann die Abbildungsachse jedoch auch geneigt zur Oberfläche des Wafers sein, solange nicht der Beleuchtungswinkel gleich dem Abbildungswinkel ist, da sich sonst die Dunkelfeld-Anordnung nicht mehr realisieren lassen würde. Bevorzugt ist die Bilderfassungseinrichtung ortsfest relativ zu der Oberfläche des Wafers angeordnet.

Bevorzugt spannen die von der Auflicht-Beleuchtungseinrichtung festgelegte Beleuchtungsachse und die von der Bilderfassungseinrichtung festgelegte Abbildungsachse eine Ebene auf, die senkrecht zu der Oberfläche des Wafers orientiert ist. In dieser Anordnung lassen sich die Auflicht-Beleuchtungseinrichtung und die Bilderfassungseinrichtung in vorteilhaft einfacher Weise ausrichten. Grundsätzlich kann die vorgenannte Ebene die Oberfläche des Wafers auch unter einem anderen Winkel schneiden, bis hin zu einem Relativwinkel von nur wenigen Grad. Durch Verschwenken der Beleuchtungsachse und/oder der Abbildungsachse lässt sich die Orientierung der von den beiden Achsen aufgespannten Ebene relativ zu der Oberfläche des Wafers gemäß einer weiteren Ausführungsform auch verändern, etwa um den Kontrast bei der Bilderfassung zu variieren.

Um die Vorrichtung noch flexibler auszulegen, kann der Einfallswinkel des Beleuchtungs-Lichtstrahls auch verändert werden, wobei bevorzugt ein von dem einfallenden Beleuchtungs-Lichtstrahl beleuchteter Bereich auf der Oberfläche des Wafers beim Verändern des Einfallswinkels ortsfest bleibt, so dass die Orientierung der Bilderfassungseinrichtung vorteilhafterweise nicht verändert werden muss. Durch Verändern des Einfallswinkels können somit Defekte auf der Oberfläche des Wafers unter verschiedenen Beleuchtungs-Bedingungen festgestellt und beurteilt werden. Durch Ändern des Einfallswinkels lässt sich insbesondere die Qualität des Kantenprofils von auf dem Wafer ausgebildeten Strukturen und von an Kanten vorhandenen Defekten in vorteilhaft einfacher Weise beurteilen. So können etwa unter einem bestimmten Einfallswinkel idealerweise rechtwinklige Kanten zu einer relativ geringen Streulichtintensität führen, wohingegen von der rechtwinkligen Idealform abweichende abgerundete Kanten nur zu einer erhöhten Streulichtintensität oder gar zu einem direkt reflektierten oder gebeugten Lichtanteil führen können, die bzw. der von der Bilderfassungseinrichtung detektiert wird.

Zum Verändern des Einfallswinkels kann die jeweilige Auflicht-Beleuchtungseinrichtung einen -Winkelverstellmechanismus aufweisen, beispielsweise eine bogenförmige Justierschiene, entlang der die Auflicht-Beleuchtungseinrichtung verschoben werden kann, wobei der Radius der Justierschiene auf den Abstand zwischen der Auflicht-Beleuchtungseinrichtung und dem Auftreffpunkt der Beleuchtungsachse auf der Oberfläche des Wafers so abgestimmt ist, dass der beleuchtete Bereich auf der Oberfläche des Wafers beim Verändern des Einfallswinkels ortsfest bleibt.

Der Einfallswinkel kann bei der erfindungsgemäßen Vorrichtung über einen großen Bereich variiert werden, etwa im Bereich von etwa 3° bis etwa 90°, bevorzugter im Bereich von etwa 20° bis etwa 90°. Besonders bevorzugt werden gemäß der vorliegenden Erfindung Einfallswinkel im Bereich von etwa 40° Grad bis etwa 86°. Es sei darauf hingewiesen, dass grundsätzlich auch ein streifender Einfall des Beleuchtungslichts auf die Oberfläche des Wafers in Betracht kommt.

Die erfindungsgemäße Vorrichtung umfasst zumindest zwei Auflicht-Beleuchtungseinrichtungen. Die Beleuchtungsachsen der beiden Auflicht-Beleuchtungseinrichtungen sind, in Draufsicht auf den Wafer betrachtet, senkrecht zueinander ausgerichtet und die jeweils von den Auflicht-Beleuchtungseinrichtungen beleuchteten Bereiche überlappen miteinander. In dieser Anordnung führen Defekte oder Vorsprünge auf der Oberfläche des Wafers, die entlang der linienförmig verlaufenden Strukturen verlaufen, zu Streulicht oder gebeugtem Licht, das von den Beleuchtungs-Lichtstrahlen aus beiden Einfallsrichtungen herrührt.

Gemäß einer anderen Ausführungsform umfasst die erfindungsgemäße Vorrichtung vier Auflicht-Beleuchtungseinrichtungen, deren Beleuchtungsachsen, in Draufsicht auf den Wafer betrachtet, orthogonal zueinander sind und die sich in einem Bereich auf der Oberfläche des Wafers schneiden. Die Auflicht-Beleuchtungseinrichtungen können wahlweise an- und ausschaltbar sein.

Bei der zumindest einen Auflicht-Beleuchtungseinrichtung kann es sich um eine monochromatische Lichtquelle handeln, beispielsweise um eine LED oder LED-Zeilenanordnung, in welchem Falle auch eine schwarz/weiß-Bilderfassungseinrichtung verwendet werden kann. Bevorzugt ist die Auflicht-Beleuchtungseinrichtung jedoch eine polychromatische Lichtquelle, beispielsweise eine Blitzlichtquelle oder eine Blitzlichtquellen-Zeilenanordnung, in welchem Falle das von der Bilderfassungseinrichtung erfasste Streulicht spektral aufgelöst detektiert und analysiert wird.

Für eine homogenere Beleuchtung der Oberfläche des Wafers kann ein Homogenisierungsmittel jeweils in dem Strahlengang des Beleuchtungs-Lichtstrahls vorgesehen sein. Das Homogenisierungsmittel kann beispielsweise eine Streuscheibe oder ein Mikrolinsenarray sein.

Gemäß einem weiteren Gesichtspunkt der vorliegenden Erfindung, der auch gesondert unabhängig beanspruchbar ist, umfasst die erfindungsgemäße Vorrichtung zumindest eine Abbildungsoptik, die einer Auflicht-Beleuchtungseinrichtung zugeordnet ist, um den zugeordneten Beleuchtungs-Lichtstrahl in eine andere Richtung umzulenken und geeignet auf die Oberfläche des Wafers abzubilden. Die Abbildungsoptik kann refraktive, diffraktive oder spiegelnde optische Elemente umfassen.

Bevorzugt ist die Abbildungsoptik ausgelegt, um auch eine gewisse räumliche Trennung zwischen Beleuchtung, Abbildungskomponenten und Bilderfassungselementen zu ermöglichen. Gemäß einer ersten Ausführungsform umfasst die Abbildungsoptik jeweils einen Spiegel, um den jeweiligen Beleuchtungs-Lichtstrahl in eine andere Richtung umzulenken. Bevorzugt wird so ein schräger oder streifender Einfall des Beleuchtungs-Lichtstrahls realisiert, ohne dass abbildende optische Elemente in der unmittelbaren Nähe des zu inspizierenden Wafers angeordnet werden müssen. Durch geeignete abbildende optische Elemente, die in dem Strahlengang des Beleuchtungs-Lichtstrahls angeordnet werden, kann der Beleuchtungs-Lichtstrahl so geformt werden, dass eine noch homogenere Beleuchtung realisiert werden kann. Gemäß dieser Ausführungsform kann die Auflicht-Beleuchtungseinrichtung insbesondere senkrecht zu der Oberfläche des Wafers ausgerichtet werden, so dass die Grundfläche der erfindungsgemäßen Vorrichtung noch weiter verringert werden kann.

Gemäß einer anderen Ausführungsform umfasst die Abbildungsoptik jeweils eine Periskop-Anordnung von Spiegeln mit geknicktem Strahlengang, um einen jeweiligen Beleuchtungs-Lichtstrahl in eine andere Richtung umzulenken. Die beiden Spiegel der Periskop-Anordnung werden bevorzugt parallel zueinander angeordnet und sind koordiniert zueinander verschwenkbar und/oder verfahrbar, so dass der Einfallswinkel des auf die Oberfläche des Wafers einfallenden Beleuchtungs-Lichtstrahls in einfacher Weise verändert werden kann. In dieser Konfiguration kann die Auflicht-Beleuchtungseinrichtung auch parallel zu der Oberfläche des Wafers ausgerichtet sein, was beispielsweise Vorteile bei der Wartung der Auflicht-Beleuchtungseinrichtung bieten kann.

Ferner kann bei der erfindungsgemäßen Vorrichtung auch eine Trennplatte vorgesehen sein, wobei zumindest ein Spiegel unterhalb der Trennplatte angeordnet ist, um den Beleuchtungs-Lichtstrahl auf die Oberfläche des Wafers umzulenken. Durch Verstellen des unterhalb der Trennplatte angeordneten Spiegels, beispielsweise durch Verschwenken und/oder vertikales Verfahren, kann der Einfallswinkel und die Lage des beleuchteten Bereichs auf der Oberfläche des Wafers geändert werden. Vorteilhaft ist, dass bei dieser Ausführungsform keine Beleuchtungseinrichtungen in unmittelbarer Nähe zu dem Wafer angeordnet werden müssen, was ansonsten leicht zu Beschädigungen der Waferoberfläche und zu Problemen bei der Justierung des Beleuchtungs-Lichtstrahls führen würde. Vielmehr können die Beleuchtungseinrichtungen an geeigneter anderer Position in der Vorrichtung oder außerhalb der Vorrichtung angeordnet werden.

Bevorzugt ist der Wafer unterhalb der Trennplatte anordenbar und sind die zumindest zwei Auflicht-Beleuchtungseinrichtungen und/oder die Bilderfassungseinrichtung oberhalb der Trennplatte angeordnet. In dieser Konfiguration kann der unterhalb der Trennplatte angeordnete Spiegel ortsfest gehalten werden und kann eine Justierung der Beleuchtungs-Lichtstrahlen ausschließlich durch Verstellen von oberhalb der Trennplatte angeordneten optischen Elementen bewerkstelligt werden. Vorteilhaft ist, dass die erfindungsgemäße Vorrichtung einfacher und sicherer justiert werden kann und noch günstigere Bedingungen für Montage, Wartung und Betrieb der Vorrichtung geschaffen werden können.

Somit wird die Vorrichtung in eine erste Ebene und in eine vertikal zu der ersten Ebene versetzte zweite Ebene unterteilt, wobei der auf Verunreinigungen vergleichsweise empfindliche Wafer in der ersten Ebene anordenbar ist und in der zweiten Ebene die weniger empfindlichen zumindest zwei Auflicht-Beleuchtungseinrichtungen und/oder die Bilderfassungseinrichtung angeordnet sind.

Zur Inspektion von Makro-Defekten wird vorzugsweise eine Bilderfassungseinrichtung verwendet, die ein Objektiv und eine Zeilen- oder Matrixkamera umfasst. Zur automatischen Inspektion der Oberfläche des Wafers ist die erfindungsgemäße Vorrichtung mit einer Datenausleseeinrichtung, beispielsweise Computer oder Framegrabber, verbunden, welche die Bilddaten der Zeilen- oder Matrixkamera sequenziell ausliest. Aus den ausgelesenen Bilddaten können dann Kenngrößen oder Defekte des Wafers bestimmt werden. Insbesondere kann die Auswertung von Defekten auf der Oberfläche des Wafers auch ortsaufgelöst ausgeführt werden, zu welchem Zweck die Daten aus der Datenausleseeinrichtung beispielsweise an Markierungen auf der Oberfläche des Wafers oder an dem Rand des Wafers ausgerichtet werden.

Nachfolgend wird die Erfindung in beispielhafter Weise und unter Bezugnahme auf die beigefügten Figuren beschrieben werden, woraus sich weitere Merkmale, Vorteile und zu lösende Aufgaben ergeben. In den Figuren zeigen:
- Fig. 1: einen Querschnitt durch die erfindungsgemäße Vorrichtung;
- Fig. 2: eine Draufsicht auf die Vorrichtung gemäß der Fig. 1;
- Fig. 3: einen Querschnitt durch eine weitere Ausführungsform gemäß der vorliegenden Erfindung mit einem Umlenkspiegel;
- Fig. 4: einen Querschnitt durch eine weitere Ausführungsform gemäß der vorliegenden Erfindung mit einer Periskop-Anordnung von Umlenkspiegeln;
- Fig. 5: einen Querschnitt durch eine weitere Ausführungsform gemäß der vorliegenden Erfindung mit einer Trennplatte zur Unterteilung der Vorrichtung in zwei vertikal zueinander versetzte Ebenen; und
- Fig. 6: eine perspektivische Darstellung einer weiteren Ausführungsform gemäß der vorliegenden Erfindung.

In den Figuren bezeichnen identische Bezugszeichen identische oder gleich wirkende Elemente oder Baugruppen.

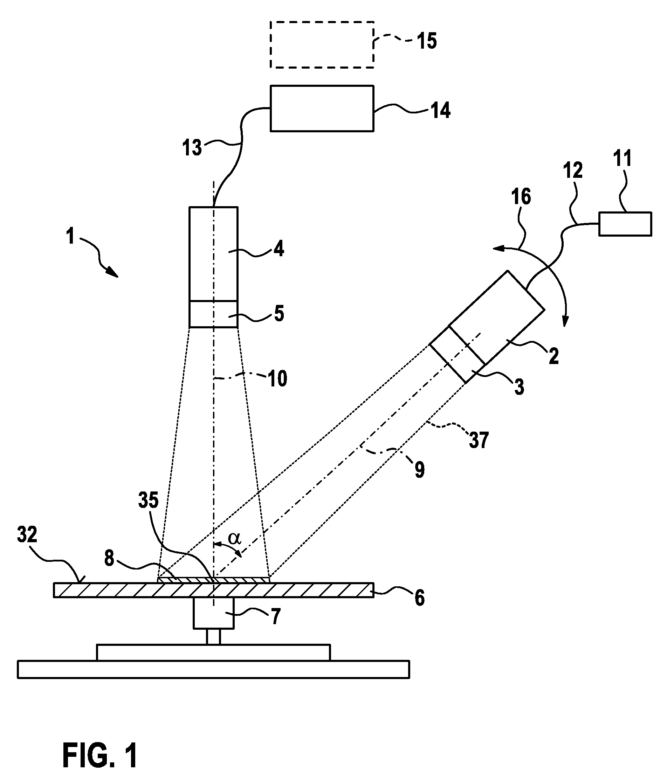

Die Fig. 1 zeigt in einem schematischen Querschnitt eine Wafer-Inspektionsvorrichtung 1 gemäß der vorliegenden Erfindung. Diese umfasst eine Auflicht-Beleuchtungseinrichtung 2, die eine Beleuchtungsachse 9 festlegt, welche die Oberfläche 32 des Wafers 6 in dem Auftreffpunkt 35 schneidet, eine als Bilderfassungseinrichtung dienende Kamera 4 sowie eine Wafer-Aufnahmeeinrichtung 7, die den Wafer 6 ortsfest oder auch drehbar hält. Auf der Wafer-Aufnahmeeinrichtung 7 wird der Wafer 6 mittels Vakuum angesaugt. Die Auflicht-Beleuchtungseinrichtung 2 weist ein abbildendes optisches Element 3, beispielsweise eine Linse oder ein Objektiv auf, das den Beleuchtungs-Lichtstrahl 37 formt, so dass die geneigt auf die Oberfläche 32 des inspizierenden Wafers 6 einfallenden Beleuchtungs-Lichtstrahlen 37 einen entsprechenden Bereich 8 ausleuchten, der die gesamte Oberfläche des Wafers 6 oder einen Unterbereich davon, beispielsweise einzelne Dies, überdeckt.

Die Kamera 4 steht senkrecht auf der Oberfläche 32 des Wafers 6 und legt eine Abbildungsachse 10 fest, welche die Oberfläche 32 des Wafers 6 in dem Auftreffpunkt 35 schneidet. An dem vorderen Ende der Kamera 4 ist ein Objektiv 5 angeordnet, so dass der beleuchtete Bereich 8 in die Kamera 4 abgebildet wird. Die Abbildungsachse 10 und die Beleuchtungsachse 9 spannen eine Ebene auf, die orthogonal zu der Oberfläche 32 des Wafers 6 ist. Grundsätzlich kann diese Ebene die Oberfläche 32 des Wafers 6 auch unter einem anderen Winkel schneiden.

In der Fig. 1 sind die Kamera 4 und die Auflicht-Beleuchtungseinrichtung 2 in einer Dunkelfeld-Anordnung angeordnet, so dass direkt von der Oberfläche 32 des Wafers 6 reflektiertes Beleuchtungslicht nicht in die Kamera 4 abgebildet wird, sondern nur Streulicht oder gebeugtes Licht, das von der Oberfläche 32 des Wafers 6 in dem beleuchteten Bereich 8 herrührt. Wie in der Fig. 1 dargestellt, ist die Beleuchtungsachse 9 zu der Oberfläche 32 des Wafers 6 geneigt. Die Beleuchtungsachse 9 schließt mit der Abbildungsachse 10, die bei dem dargestellten Beispiel einer Normalen auf die Oberfläche 32 des Wafers 6 entspricht, den Einfallswinkel ein. Der Einfallswinkel wird geeignet gewählt, was auch von den auf dem Wafer 6 auszubildenden Strukturen abhängen kann. Wenngleich der Einfallswinkel grundsätzlich über einen weiten Bereich variiert werden kann, etwa von 3° bis etwa 90°, bevorzugter von etwa 20° bis etwa 90°, wird bevorzugt, wenn der Beleuchtungs-Lichtstrahl 37 auf die Oberfläche 32 des Wafers 6 unter einem Einfallswinkel im Bereich von etwa 40° Grad bis etwa 86°einfällt.

Wie durch den Doppelpfeil 16 angedeutet, kann die Auflicht-Beleuchtungseinrichtung 2 auch schwenkbar gehalten sein, so dass der Einfallswinkel an den jeweils zu inspizierenden Wafer 6 angepasst werden kann. Zur Veränderung des Einfallswinkels kann ein -Verstellmechanismus (nicht dargestellt) vorgesehen sein, der so ausgelegt ist, dass beim Ändern des Einfallswinkels der beleuchtete Bereich 8 auf der Oberfläche 32 des Wafers 6 im Wesentlichen ortsfest bleibt. Zu diesem Zweck kann der nicht dargestellte -Verstellmechanismus beispielsweise eine bogenförmige Justierschiene aufweisen, deren Radius so auf den Abstand zwischen der Auflicht-Beleuchtungseinrichtung 2 und dem Auftreffpunkt 35 abgestimmt ist, dass der Auftreffpunkt 35 beim Verschwenken der Auflicht-Beleuchtungseinrichtung 2 im Wesentlichen ortsfest bleibt.

Eine Lichtquelle kann in der Auflicht-Beleuchtungseinrichtung 2 unmittelbar vorgesehen sein. Wie in der Fig. 1 dargestellt, kann die Auflicht-Beleuchtungseinrichtung 2 auch eine externe Lichtquelle 11 umfassen, deren Licht über ein Lichtleiterbündel 12 in den Strahlengang eingekoppelt wird. Die Lichtquelle 11 kann eine monochromatische oder polychromatische Lichtquelle sein. Als monochromatische Lichtquellen eignen sich insbesondere LEDs oder LED-Zeilenanordnungen. Als polychromatische Lichtquellen eignen sich insbesondere Blitzlichtlampen, Weißlicht-LEDs und dergleichen. Die Lichtquelle 11 kann kontinuierlich betrieben werden. Bevorzugt wird die Lichtquelle 11 jedoch getaktet betrieben, beispielsweise als Blitzlicht, das synchron zu der Bildaufnahme ausgelöst wird.

Ganz besonders bevorzugt werden als Auflicht-Beleuchtungseinrichtung 2 Linien-Faserbeleuchtungen verwendet, deren linienförmig abgestrahltes Licht mit einer Zylinderlinse aufgeweitet wird.

Die Kamera 4 ist über eine Datenleitung 13 mit einer Datenausleseeinrichtung 14 verbunden, welche die erfassten Bilddaten auswertet oder zwischenspeichert, etwa für eine spätere Bildauswertung. Die Datenausleseeinrichtung 14 ist bevorzugt ein Computer mit einem Framegrabber, der die Zeilen einer CCD-Kamera 4 periodisch oder getaktet, beispielsweise synchron zur Auslösung des Blitzlichts, ausliest. Die ausgelesenen Bilddaten können auch auf dem Monitor 15 dargestellt oder dort mittels geeigneter Software ausgewertet dargestellt werden.

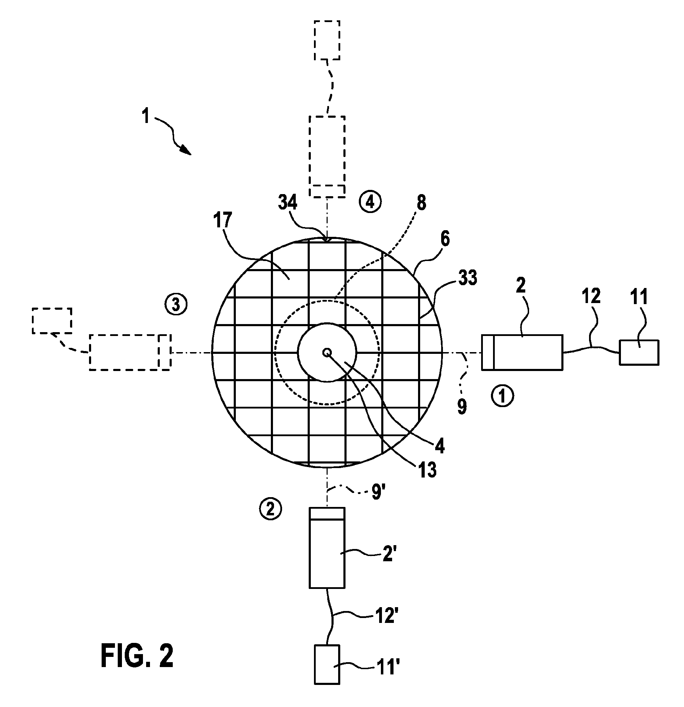

Die Fig. 2 zeigt in einer schematischen Draufsicht die Wafer-Inspektionsvorrichtung 1 gemäß der Fig. 1. Wie in der Fig. 2 dargestellt ist, umfasst die Wafer-Inspektionsvorrichtung 1 zwei Auflicht-Beleuchtungseinrichtungen 2, 2', die unter einem rechten Winkel zueinander ausgerichtet sind. Das Licht der Lichtquelle 11, 11' wird über jeweilige Lichtleiterbündel 12, 12' in die jeweilige Auflicht-Beleuchtungseinrichtung 2, 2' eingekoppelt. Wie in der Fig. 2 dargestellt, ist der Wafer 6 unter einer vorgebbaren Orientierung in der Wafer-Inspektionsvorrichtung 1 gehalten.

Wie in der Fig. 2 dargestellt, sind auf der Oberfläche des Wafers 2 linienförmig verlaufende Strukturen 33 ausgebildet, die in einer Richtung oder in zwei zueinander orthogonale Richtungen verlaufen. Im letzteren Falle wird die Oberfläche des Wafers 6 somit in rechteckförmige Unterbereiche 17 unterteilt, die beispielsweise einem Die entsprechen können. An dem Umfangsrand des Wafers 6 ist ein Notch 34 oder ein Flat vorgesehen, das zur Orientierung des Wafers 6 dient. Sämtliche Prozessschritte zur Ausbildung von Strukturen auf dem Wafer 6 werden bekanntlich unter einer vorgegebenen Orientierung des Wafers 6 ausgeführt. Weil das Layout der auszubildenden Strukturen bekannt ist, kann aus der Lage des Notches 34 oder des Flats auf dem Umfangsrand des Wafers 6 in eindeutiger Weise auf den Verlauf der linienförmigen Strukturen 33 geschlossen werden. Der Wafer 6 kann seinerseits mit Hilfe eines Prealigners fest vorgebbar orientiert werden. In der Fig. 2 ist das Notch 34 oben angeordnet. Der Prealigner (nicht dargestellt) kann Bestandteil der Wafer-Inspektionsvorrichtung 1 sein oder kann stromaufwärts der Wafer-Inspektionsvorrichtung 1 positioniert sein, in welchem Falle der Wafer 6 mit einer vorgegebenen Orientierung an die Wafer-Inspektionsvorrichtung 1 übergeben wird.

Wie in der Fig. 2 dargestellt, wird der Wafer 6 in solcher Weise an die Wafer-Aufnahmeeinrichtung 7 (Fig. 1) übergeben, dass die Projektionen der Beleuchtungsachsen 9, 9' auf die Oberfläche des Wafers 6 im Wesentlichen senkrecht zu den linienförmigen Strukturen 33 auf der Oberfläche 32 des Wafers 6 verlaufen. Geringe Abweichungen von dem Idealfall einer exakt senkrechten Ausrichtung der Beleuchtungsachsen 9, 9' zu den linienförmigen Strukturen 33 sind gemäß der vorliegenden Erfindung möglich, beispielsweise kann die Fehlausrichtung bis etwa 5°, bevorzugter nur bis etwa 3° und noch bevorzugter nur bis etwa 1° oder sehr viel weniger betragen.

Wie durch die gestrichelten Linien in der Fig. 2 angedeutet, bestehen mehrere Möglichkeiten, zwei Auflicht-Beleuchtungseinrichtungen 2 so um den Wafer 6 herum anzuordnen, dass die Projektionen der jeweiligen Beleuchtungsachsen auf die Oberfläche des Wafers 6 im wesentlichen senkrecht zu den linienförmigen Strukturen 33 auf der Oberfläche des Wafers 6 ausgerichtet sind. Grundsätzlich können auch vier Auflicht-Beleuchtungseinrichtungen 2 an den mit den Ziffern 1 bis 4 bezeichneten Positionen mit, in Draufsicht auf den Wafer 6 betrachtet, zueinander orthogonalen Beleuchtungsachsen 9 um den Wafer 6 herum angeordnet sein, die selektiv zugeschaltet werden können. Gemäß der vorliegenden Erfindung können die zwei Beleuchtungs-Lichtstrahlen in der Projektion auf die Oberfläche des Wafers 6 zueinander orthogonal oder gegenläufig einfallen, wenn nur zwei Auflicht-Beleuchtungseinrichtungen 2 verwendet werden. Es ist darauf zu achten, dass der von einer jeweiligen Auflicht-Beleuchtungseinrichtung 2 beleuchtete Bereich 8 mit dem von einer anderen Auflicht-Beleuchtungseinrichtung 2' beleuchteten Bereich 8 ausreichend überlappt, vorzugsweise im Wesentlichen vollständig.

Erfindungsgemäß wird eine Geometrie mit zwei Auflicht-Beleuchtungseinrichtungen 2, 2' verwendet, die so auf die Oberfläche des Wafers 6 einstrahlen, dass die Projektionen der Beleuchtungsachsen 9, 9' auf die Oberfläche 32 des Wafers 6 zueinander orthogonal verlaufen und sich in einem Auftreffpunkt schneiden, wo auch die Abbildungsachse 10 der Kamera 4 die Oberfläche des Wafers 6 schneidet.

Durch die erfindungsgemäße Ausrichtung der Beleuchtungsachsen 9, 9' relativ zu den linienförmigen Strukturen 33 auf der Oberfläche des Wafers 6 werden zwei Vorzugsrichtungen vorgegeben, die eine noch zuverlässigere Inspektion der Oberfläche des Wafers ermöglichen. Denn es ist davon auszugehen, dass die Defekte auf der Oberfläche des Wafers insbesondere dort, wo sich das Profil der Oberfläche abrupt oder diskontinuierlich ändert, anhäufen, d. h. insbesondere entlang den linienförmigen Strukturen 33. Erfindungsgemäß korrespondiert diese Anordnung von Defekten mit den durch die Beleuchtungsanordnung vorgegebenen Vorzugsrichtungen.

Üblicherweise wird die Oberfläche 32 des Wafers 6 nur mit einem festen Einfallswinkel inspiziert. Alternativ, wenn ein motorisch betriebener - Verstellmechanismus vorgesehen ist, kann die Oberfläche 32 des Wafers 6 auch bei mehreren Einfallswinkeln inspiziert werden. Die Datenauswertung erfolgt automatisiert in dem Computer 14 mittels geeigneter Software.

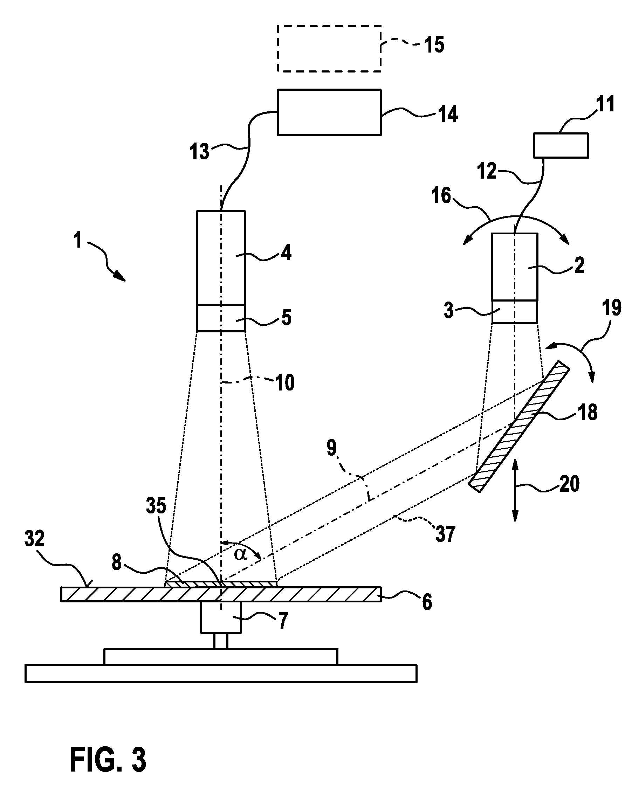

Die Figuren 3 bis 5 zeigen weitere Ausführungsformen der Wafer-Inspektionsvorrichtung 1, bei denen der Beleuchtungs-Lichtstrahl 37 umgelenkt wird. Gemäß der Fig. 3 ist die Auflicht-Beleuchtungseinrichtung 2 im Wesentlichen orthogonal zu der Oberfläche 32 des Wafers 6 ausgerichtet und wird der Beleuchtungs-Lichtstrahl 37 über einen Umlenkspiegel 18 auf die Oberfläche 32 des Wafers 6 abgebildet. Wie durch die Doppelpfeile 19, 20 angedeutet, kann die Position und Orientierung des Umlenkspiegels 18 variiert werden, wodurch der Einfallswinkel in einfacher Weise geändert werden kann. Der Umlenkspiegel 18 kann insbesondere in unmittelbarer Nähe zu dem Umfangsrand des Wafers 6 angeordnet werden, so dass sich auch vergleichsweise große Einfallswinkel , bis hin zu beinahe 90 Grad, ohne weiteres realisieren lassen. Wie durch den Doppelpfeil 16 angedeutet, kann auch die Auflicht-Beleuchtungseinrichtung verschwenkt werden.

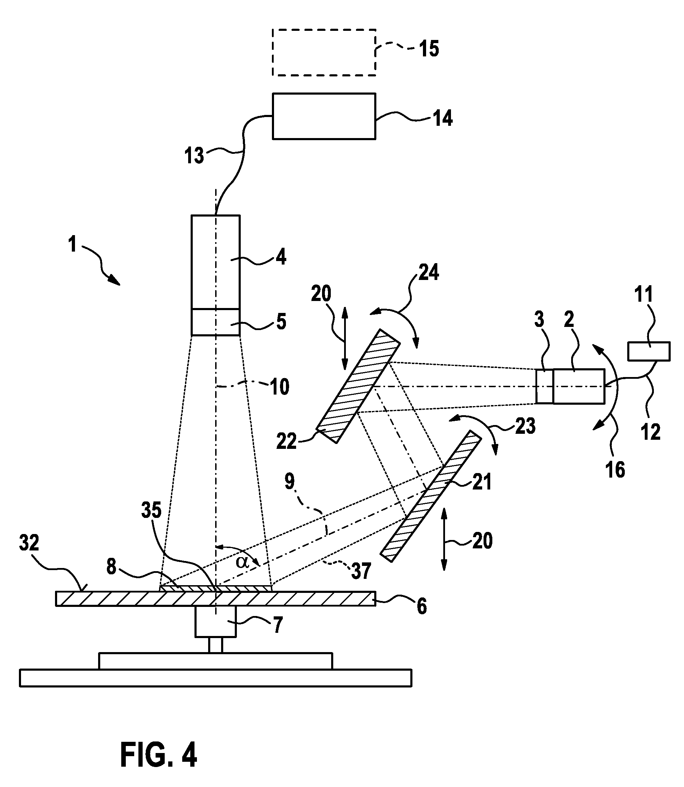

Gemäß der Fig. 4 ist eine Periskop-Anordnung von zwei Umlenkspiegeln 21, 22 vorgesehen, die den Strahlengang des Beleuchtungs-Lichtstrahls geeignet faltet. Wie in der Fig. 4 dargestellt, ist die Auflicht-Beleuchtungseinrichtung 2 im Wesentlichen parallel zu der Oberfläche 32 des Wafers 6 ausgerichtet. Wie durch die Doppelpfeile 20, 23 angedeutet, können die Umlenkspiegel 21, 22 unabhängig oder koordiniert zueinander verschwenkt werden. Wie durch den Doppelpfeil 16 angedeutet, kann auch die Auflicht-Beleuchtungseinrichtung 2 um ihre Längsachse verschwenkt werden. Durch diese Anordnung kann der Einfallswinkel und die Aufweitung des Beleuchtungs-Lichtstrahls 37 in einfacher Weise geändert werden.

Selbstverständlich eignen sich zur Umlenkung des Beleuchtungs-Lichtstrahls auch andere optische Elemente, beispielsweise diffraktive oder refraktive optische Elemente. Auch in dem Strahlengang von dem beleuchteten Bereich 8 zu der Kamera 4 kann eine Abbildungsoptik vorgesehen sein, so dass die Kamera 4 auch weiter entfernt oder in anderer Orientierung zu dem Wafer 6 angeordnet werden kann.

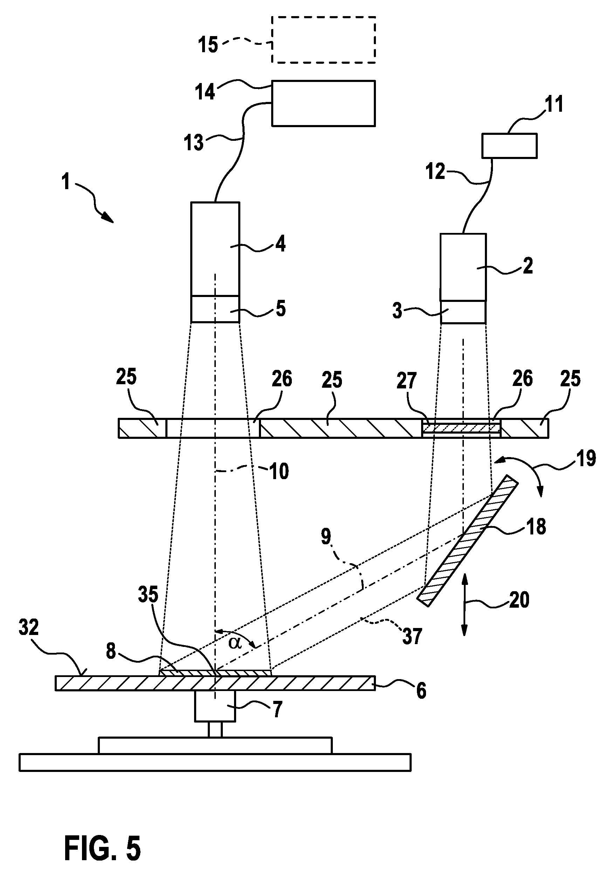

Eine Strahlumlenkung, die in den Figuren 3 und 4 gezeigt ist, kann auch zu einer räumlichen Unterteilung der Wafer-Inspektionsvorrichtung verwendet werden. Dies ist schematisch in der Fig. 5 dargestellt, wo die Wafer-Inspektionsvorrichtung 1 einen Umlenkspiegel 18 aufweist, der in der im Zusammenhang mit der Fig. 3 beschriebenen Weise gehaltert und auch verfahren bzw. verschwenkt werden kann.

Über dem Umlenkspiegel 18 ist eine Platte 25 angeordnet, die zwei Öffnungen 26 für den Beleuchtungs-Lichtstrahl und den Abbildungs-Lichtstrahl aufweist. In den Öffnungen 26 können transparente Platten 27, abbildende optische Elemente, beispielsweise Linsen, oder als Homogenisierungsmittel dienende Streuscheiben, Mikrolinsenarrays oder dergleichen angeordnet sein. Wie in der Fig. 5 gezeigt, sind die meisten anderen Elemente der Wafer-Inspektionsvorrichtung 1 einschließlich der Auflicht-Beleuchtungseinrichtung 2, des abbildenden optischen Elements 3, des Objektivs 5 und der Kamera 4 oberhalb der Platte 25 angeordnet. Selbstverständlich kann die Platte 25 auch bei der in der Fig. 4 dargestellten Periskop-Anordnung von Spiegeln verwendet werden. In einer solchen, nicht dargestellten Konfiguration wird die Platte bevorzugt zwischen den Spiegeln 21, 22 (Fig. 4) angeordnet, wobei der untere Spiegel 21 dann auch ortsfest gehalten werden kann während der obere Spiegel 22 bevorzugt schwenkbar und/oder verfahrbar gehalten ist, damit die Justierung des Beleuchtungs-Lichtstrahls 37 verändert werden kann.

Insgesamt wird die Wafer-Inspektionsvorrichtung 1 durch die Platte 25 in zwei vertikal zueinander versetzte Ebenen unterteilt, wobei in der unteren Ebene im Wesentlichen nur der Wafer 6 und die Wafer-Aufnahmeeinrichtung 7 angeordnet sind, während in der vertikal darüber befindlichen Ebene die wichtigsten optische Elemente, die Lichtquellen und die Kamera zur Bilderfassung angeordnet sind. Diese räumliche Unterteilung der Wafer-Inspektionsvorrichtung 1 bietet neue Möglichkeiten bei deren Auslegung, die zu geringeren Kosten, einer vorteilhafteren Wartung und Instandhaltung und zu einem noch vorteilhafteren Betrieb führen können. Außerdem kann der Aufwand zur Justierung der Wafer-Inspektionsvorrichtung 1 verringert werden.

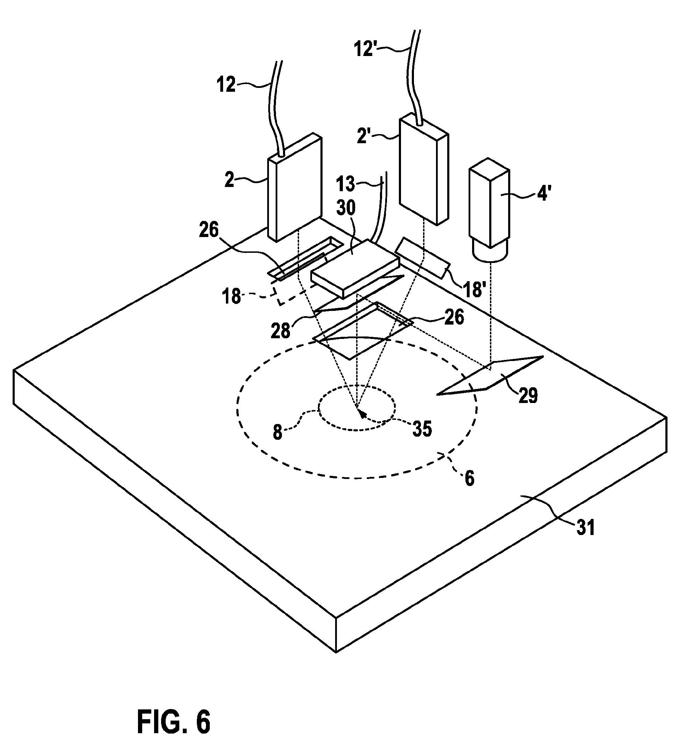

Die Fig. 6 zeigt in einer perspektivischen Anordnung eine weitere Ausführungsform einer Wafer-Inspektionsvorrichtung 1. Sämtliche Elemente sind auf einer Montageplatte 31 angebracht. Die Auflicht-Beleuchtungseinrichtungen 2, 2' sind senkrecht zu der Oberfläche des nicht dargestellten Wafers ausgerichtet. Die jeweiligen Beleuchtungs-Lichtstrahlen werden über die Umlenkspiegel 18, 18' unter streifendem Einfallswinkel auf die Oberfläche des Wafers abgebildet. Auch die Kamera 4' ist senkrecht zu der Oberfläche des Wafers ausgerichtet. Das in dem beleuchteten Bereich auf der Oberfläche des Wafers gestreute Licht wird über den teildurchlässigen Spiegel 28 und den Umlenkspiegel 29 in die Kamera 4' abgebildet. Oberhalb des teildurchlässigen Spiegels 28 befindet sich eine Flächenbeleuchtung 30, die für andere Inspektionsverfahren verwendet werden kann. Durch die senkrechte Anordnung der Auflicht-Beleuchtungseinrichtung 2, 2' und der Kamera 4' ist die Grundfläche der Wafer-Inspektionsvorrichtung 1 vorteilhaft klein.

Wenngleich in den vorstehend beschriebenen Figuren nicht dargestellt, umfasst die erfindungsgemäße Wafer-Inspektionsvorrichtung 1 einen Verfahrtisch, beispielsweise einen XY-Verfahrtisch, so dass durch geeignetes Verfahren des Wafers 6 die gesamte Oberfläche 32 des Wafers 6 abgetastet werden kann. Die erfindungsgemäße Wafer-Inspektionsvorrichtung eignet sich insbesondere zur Beurteilung des Kantenprofils von auf der Oberfläche des Wafers linienförmig verlaufenden Strukturen.

## Patentansprüche

1. Vorrichtung zur Inspektion eines Wafers, umfassend zumindest zwei Auflicht-Beleuchtungseinrichtungen (2, 2'), die jeweils einen Beleuchtungs-Lichtstrahl (37) abstrahlt, der schräg auf eine Oberfläche (32) eines zu inspizierenden Wafers (6) einfällt und jeweils eine Beleuchtungsachse (9, 9') festlegen, eine Bilderfassungseinrichtung (4) zum Erfassen eines Bildes der Oberfläche (32) in einer Dunkelfeld-Anordnung sowie eine Wafer-Aufnahmeeinrichtung (7) zum Aufnehmen des Wafers (6) unter einer vorgebbaren Orientierung, auf dessen Oberfläche (32) linienförmig verlaufende Strukturen (33) ausgebildet sind, **dadurch gekennzeichnet, dass** die Beleuchtungsachsen (9, 9') senkrecht zueinander ausgerichtet sind und die Vorrichtung so ausgelegt ist, dass eine Projektion der jeweiligen Beleuchtungsachse (9) auf die Oberfläche (32) des Wafers (6) im Wesentlichen senkrecht zu jeweiligen linienförmigen Strukturen (33) auf der Oberfläche (32) des Wafers (6) ausgerichtet ist.

2. Vorrichtung nach Anspruch 1, bei der eine von der Bilderfassungseinrichtung (4) festgelegte Abbildungsachse (10) senkrecht zur Oberfläche (32) des Wafers (6) orientiert ist.

3. Vorrichtung nach einem der vorhergehenden Ansprüche, bei der ein Einfallswinkel ( ) des Beleuchtungs-Lichtstrahls (37) veränderbar ist, wobei ein beleuchteter Bereich (8) auf der Oberfläche des Wafers ortsfest bleibt, wenn der Einfallswinkel geändert wird.

4. Vorrichtung nach dem vorhergehenden Anspruch, bei der der Einfallswinkel ( ) im Bereich von etwa 3º bis etwa 90º, bevorzugter im Bereich von etwa 20º bis etwa 90º und noch bevorzugter im Bereich von etwa 40º bis etwa 86º liegt.

5. Vorrichtung nach einem der vorhergehenden Ansprüche, wobei zumindest eine weitere Auflicht-Beleuchtungseinrichtung (2, 2'), so angeordnet ist, dass zwei Beleuchtungsachsen (9, 9') parallel zueinander ausgerichtet sind, wobei Bereiche (8) auf der Oberfläche (32) des Wafers (6), die jeweils von den Auflicht-Beleuchtungseinrichtungen (2, 2') beleuchtet werden, miteinander überlappen.

6. Vorrichtung nach einem der vorhergehenden Ansprüche, umfassend vier Auflicht-Beleuchtungseinrichtungen (2, 2'), deren Beleuchtungsachsen (9, 9') orthogonal zueinander sind und sich in einem Bereich (8) auf der Oberfläche des Wafers schneiden, der in die Bilderfassungseinrichtung (4) abgebildet wird.

7. Vorrichtung nach einem der vorhergehenden Ansprüche, bei der die zumindest eine Auflicht-Beleuchtungseinrichtung (2, 2') eine monochromatische Lichtquelle (11, 11') umfasst.

8. Vorrichtung nach einem der vorhergehenden Ansprüche, bei der die zumindest eine Auflicht-Beleuchtungseinrichtung (2, 2') eine polychromatische Lichtquelle (11, 11') umfasst und die Bilderfassungseinrichtung (4) ein Bild von der Oberfläche (32) des Wafers (6) spektral aufgelöst erfasst.

9. Vorrichtung nach dem vorhergehenden Anspruch, bei der die polychromatische Lichtquelle eine Blitzlichtquelle oder Blitzlichtquellen-Zeilenanordnung ist.

10. Vorrichtung nach einem der vorhergehenden Ansprüche, bei der eine Auflicht-Beleuchtungseinrichtung (2, 2') jeweils ein Lichtleiterbündel (12) und ein zugeordnetes abbildendes optisches Element (3) umfasst.

11. Vorrichtung nach dem vorhergehenden Anspruch, bei der die Abbildungsoptik jeweils einen Spiegel (18) umfasst, um einen jeweiligen Beleuchtungs-Lichtstrahl (37) in eine andere Richtung umzulenken, wobei die Auflicht-Beleuchtungseinrichtung (2, 2') senkrecht zu der Oberfläche (32) des Wafers (6) ausgerichtet ist.

12. Vorrichtung nach Anspruch 11, bei der der die Abbildungsoptik jeweils eine Periskop-Anordnung von Spiegeln (21, 22) umfasst, um einen jeweiligen Beleuchtungs-Lichtstrahl (37) in eine andere Richtung umzulenken, wobei die Auflicht-Beleuchtungseinrichtung (2, 2') parallel zu der Oberfläche (32) des Wafers (6) ausgerichtet ist.

13. Vorrichtung nach einem der beiden vorhergehenden Ansprüche, wobei der oder die Spiegel (18; 21, 22) verschwenkbar und/oder verfahrbar gehaltert sind.

14. Vorrichtung nach einem der Ansprüche, bei der eine Trennplatte (25) vorgesehen ist, wobei zumindest ein Spiegel (18; 21, 22) unterhalb der Trennplatte angeordnet ist, um den Beleuchtungs-Lichtstrahl (37) auf die Oberfläche (32) des Wafers (6) umzulenken.

15. Vorrichtung nach Anspruch 14, bei der der Wafer (6) unterhalb der Trennplatte (25) anordenbar ist und die zumindest zwei Auflicht-Beleuchtungseinrichtungen (2, 2') und/oder die Bilderfassungseinrichtung (4) oberhalb der Trennplatte (25) angeordnet sind.
